# EUROPEAN PATENT APPLICATION

(11) **EP 3 554 007 A1**
(43) Date of publication of application: **16.10.2019**
(21) Application number: 17877993.0
(22) Date of filing: 20.10.2017
(51) Int. Cl.: H04L 12/24

(54) **PARALLEL RECOVERY METHOD, DEVICE AND SYSTEM FOR MULTIPLE SERVICES IN SDN ARCHITECTURE**

(30) Priority: 08.12.2016 CN 201611123754
(71) Applicant: ZTE Corporation, Shenzhen, Guangdong 518057 (CN)
(72) Inventor: ZHANG, Shuai, Shenzhen Guangdong 518057 (CN)
(74) Representative: Petit, Maxime
(86) International application number: PCT/CN2017/107019
(87) International publication number: WO 2018/103460

(57) **Abstract**

Embodiments of the present application provide a parallel recovery method, apparatus and system for multiple services in Software Defined Network architecture, called SDN architecture. The method includes: receiving at least one piece of failure warning information reported by an Optical Transport Network device, called OTN network device, which belongs to an OTN node; generating corresponding configuration messages for the OTN node based on the received failure warning information, wherein the configuration messages are used to reconfigure all failed services at the OTN node; and sending the configuration messages to corresponding OTN node. The embodiments of the present application solve the technical problem of low efficiency of handling routing failures in SDN networks in existing art.

## Description

### TECHNICAL FIELD

The present application relates to a field of Internet, and in particular to a parallel recovery method, apparatus and system for multiple services in SDN architecture.

### BACKGROUND

With the rapid development of Software Defined Network technology, called SDN network technology, international standards organizations such as the Optical Internetworking Forum, called OIF, and the Open Networking Foundation, called ONF, dedicated to formulation of standards and architectures related to Optical Transport Networks , called OTN networks, have all shifted their research focuses to SDN, so that it is a general trend of developing from traditional OTN networks to SDN architectures. With the development of flat networks, the OTN networks and Packet Transport Networks, called PTN networks, will gradually merge together, and more and more small-grained services will be connected to the OTN networks for transmission. Due to large transmission bandwidths in the OTN networks, interruption of an optical cable will result in a need for routing recovery for dozens and even hundreds of services.

"Recovery" refers to replacing failed connections by rerouting with idle sources in a network and establishing new connections, and is characterized in that multiple failures can be resisted as long as there are enough remaining sources in the network without occupying excessively additional sources. However, since the recovery is a dynamic process of detecting and handling failures in real time, services will be damaged for a long time, which results in low failure handling efficiency. Nowadays, in view of the above characteristics of the recovery, major network operators and equipment manufacturers at home and abroad are very concerned about recovery performance of services.

At present, no effective solutions have been proposed for the technical problem of low efficiency of handling routing failures in SDN networks in existing art.

### SUMMARY

Embodiments of the present application provides a parallel recovery method, apparatus and system for multiple services in an SDN architecture, so as to at least solve the technical problem of low efficiency of handling routing failures in SDN networks in existing art.

One aspect of the embodiments of the present application provides a parallel recovery method for multiple services in an SDN architecture, including receiving at least one piece of failure warning information reported by an OTN network device which belongs to an OTN node; generating corresponding configuration messages for the OTN node based on the received failure warning information, wherein the configuration messages are used to reconfigure all failed services at the OTN node; and sending the configuration messages to the corresponding OTN node.

Optionally, after the configuration messages are sent to the corresponding OTN node, the method further includes: sending preset information to the OTN node, wherein the preset information is used to instruct the OTN node to feed back a configuration result; and receiving feedback information sent from the OTN node for indicating the configuration result.

Optionally, generating corresponding configuration messages for the OTN node based on the received failure warning information includes: determining recovery paths for the failed services according to the failure warning information; determining Sub Network Connect cross information, called SNC cross information, corresponding to the recovery paths; and generating the configuration messages containing the SNC cross information for operating the OTN node.

Optionally, the step of determining recovery paths for the failed services according to the failure warning information includes: acquiring failure location information of the failed services from the failure warning information; and generating recovery paths for the failed services according to the failure location information.

Optionally, determining SNC cross information corresponding to the recovery paths includes: acquiring path information of the recovery paths; and converting the path information of the recovery paths into SNC cross information.

Optionally, the configuration messages include flow_mod messages, wherein the flow_mod messages are used for carrying at least one piece of SNC cross information.

Optionally, the above parallel recovery method is applied to an SDN controller.

Another aspect of the embodiments of the present application provides a parallel recovery method for multiple services in an SDN architecture, including sending at least one piece of failure warning information reported by an OTN network device to an SDN controller; receiving configuration messages sent by the SDN controller, wherein the configuration messages are used to reconfigure failed services; and reconfiguring OTN boards used for performing the failed services according to the configuration messages.

Optionally, reconfiguring OTN boards used for performing the failed services according to the configuration messages includes: generating at least one configuration command used for configuring the OTN boards according to the configuration messages; and carrying the configuration commands used for configuring a same OTN board in a configuration request, and sending the configuration request to the corresponding OTN board.

Optionally, after the OTN boards used for performing the failed services are reconfigured according to the configuration messages, the method further includes: while receiving preset information sent by the SDN controller, collecting configuration results of the configured OTN boards according to the preset information; carrying the collected configuration results in feedback information and feeding back the feedback information to the SDN controller, wherein the feedback information contains identification information of the OTN boards which failed to be configured.

Optionally, collecting configuration results of the configured OTN boards according to the preset information includes: receiving information sent by the OTN boards which indicates that configuration is failed; receiving information sent by the OTN boards which indicates that reconfiguration is succeeded; and, if no configuration result of the OTN boards is received within preset time, using configuration timeout as the configuration result of the OTN boards.

Optionally, generating at least one configuration command used for configuring the OTN boards according to the configuration messages includes: acquiring at least one piece of SNC cross information from the configuration messages; and converting the at least one piece of SNC cross information into at least one configuration command.

Optionally, carrying the configuration commands used for configuring a same OTN board in a configuration request, and sending the configuration request to the corresponding OTN board includes: generating TLV data packets corresponding to the configuration commands in a TLV format; and carrying the TLV data packets used for configuring a same OTN board in the configuration request, and sending the configuration request to the corresponding OTN board.

Optionally, the configuration messages include flow_mod messages, wherein the flow_mod messages are used for carrying at least one piece of SNC cross information.

Optionally, the above parallel recovery method is applied to an OTN node.

Another aspect of the embodiments of the present application provides a parallel recovery apparatus for multiple services in an SDN architecture, including a first receiving unit configured to receive at least one piece of failure warning information reported by an OTN network device which belongs to an OTN node; a generating unit configured to generate corresponding configuration messages for the OTN node based on the received failure warning information, wherein the configuration messages are used to reconfigure all failed services at the OTN node; and a first sending unit configured to send the configuration messages to the corresponding OTN node.

Optionally, after the configuration messages are sent to the corresponding OTN node, the first sending unit is further configured to send preset information to the OTN node, wherein the preset information is used to instruct the OTN node to feed back a configuration result; the apparatus further includes a second receiving unit configured to receive feedback information sent from the OTN node for indicating the configuration result.

Optionally, the generating unit includes a first determining module configured to determine recovery paths for the failed services according to the failure warning information; a second determining module configured to determine SNC cross information corresponding to the recovery paths; and a first generating module configured to generate the configuration messages containing the SNC cross information for operating the OTN node.

Optionally, the first determining module includes a first acquiring submodule configured to acquire failure location information of the failed services from the failure warning information; and a generating submodule configured to generate recovery paths for the failed services according to the failure location information.

Optionally, the second determining module includes a second acquiring submodule configured to acquire path information of the recovery paths; and a converting submodule configured to convert the path information of the recovery paths into the SNC cross information.

Optionally, the apparatus includes a second sending unit configured to send at least one piece of failure warning information reported by an OTN network device to an SDN controller; a third receiving unit configured to receive configuration messages sent by the SDN controller, wherein the configuration messages are used to reconfigure failed services; and a configuration unit configured to reconfigure OTN boards used for performing the failed services according to the configuration messages.

Optionally, the configuration unit includes a second generating module configured to generate at least one configuration command used for configuring the OTN boards according to the configuration messages; and a sending module configured to carry the configuration commands used for configuring a same OTN board in a configuration request, and send the configuration request to the corresponding OTN board.

Another aspect of the embodiments of the present application further provides parallel recovery apparatus for multiple services in an SDN architecture, including a collecting unit configured to collect configuration results of the configured OTN boards according to preset information while the preset information sent by the SDN controller is received, after the OTN boards used for performing the failed services are reconfigured according to the configuration messages; and a feedback unit configured to carry the collected configuration results in feedback information and feed back the feedback information to the SDN controller, wherein the feedback information contains identification information of the OTN boards which failed to be configured.

Optionally, the collecting unit includes a first receiving module configured to receive information sent by OTN boards which indicates that configuration is failed; a second receiving module configured to receive information sent by the OTN boards which indicates that configuration is succeeded; and a processing module configured to use configuration timeout as a configuration result of the OTN boards if no configuration result of the OTN boards is received within preset time.

Optionally, the second generating module includes a third acquiring submodule configured to acquire at least one piece of SNC cross information from the configuration messages; and a converting submodule configured to convert the at least one piece of SNC cross information into at least one configuration command.

Another embodiment of the present application further provides a parallel recovery system for multiple services in an SDN architecture, including an SDN controller and an OTN node, wherein the SDN controller is configured to receive at least one piece of failure warning information reported by an OTN network device which belongs to an OTN node, and generate corresponding configuration messages for the OTN node based on the received failure warning information, wherein the configuration messages are used to reconfigure all failed services at the OTN node; and the OTN node is configured to receive the configuration messages sent by the SDN controller.

Optionally, the SDN controller is further configured to send preset information to the OTN node after the configuration messages are sent to the corresponding OTN node, wherein the preset information is used to instruct the OTN node to feed back a configuration result, and to receive feedback information sent from the OTN node for indicating the configuration result.

Another embodiment of the present application further provides an SDN device, including an SDN controller; a first memory configured to store commands capable of being executed by the SDN controller; and a first transmission device configured to receive and send information for communication under the control of the SDN controller, wherein the SDN controller is configured to execute following operations: receiving at least one piece of failure warning information reported by an OTN network device which belongs to an OTN node; generating corresponding configuration messages for the OTN node based on the received failure warning information, wherein the configuration messages are used to reconfigure all failed services at the OTN node; and sending the configuration messages to the corresponding OTN node.

Optionally, the SDN controller is further configured to execute following operations: sending preset information to the OTN node after the configuration messages are sent to the corresponding OTN node, wherein the preset information is used to instruct the OTN node to feed back a configuration result; and receiving feedback information sent from the OTN node for indicating the configuration result.

Another embodiment of the present application further provides an OTN device, including an OTN controller; a second memory configured to store commands capable of being executed by the OTN controller; and a second transmission device configured to receive and send information for communication under the control of the OTN controller, wherein the OTN controller is configured to execute following operations: sending at least one piece of failure warning information reported by an OTN network device to an SDN controller; receiving configuration messages sent by the SDN controller, wherein the configuration messages are used to reconfigure failed services; and reconfiguring OTN boards used for performing the failed services according to the configuration messages.

Optionally, the OTN controller is further configured to execute following operations: generating at least one configuration command used for configuring the OTN boards according to the configuration messages; and carrying the configuration commands used for configuring a same OTN board in a configuration request, and sending the configuration request to the corresponding OTN board.

Another embodiment of the present application provides a storage medium, which may be configured to store program codes used for performing the following steps: receiving at least one piece of failure warning information reported by an OTN network device which belongs to an OTN node; generating corresponding configuration messages for the OTN node based on the received failure warning information, wherein the configuration messages are used to reconfigure all failed services at the OTN node; and sending the configuration messages to the corresponding OTN node, and the OTN node configures a same OTN board with configuration commands corresponding to the same ONT board in the configuration messages.

In to the embodiments of the present disclosure, at least one piece of failure warning information reported by an OTN network device which belongs to an OTN node is received; corresponding configuration messages are generated for the OTN node based on the received failure warning information, wherein the configuration messages are used to reconfigure all failed services on the OTN node; and the configuration messages are sent to the corresponding OTN node, and all configuration related information of a certain node is sent via a message packet, which solves the technical problem in existing art of low efficiency of handling routing failure in the SDN network, and achieves a technical effect of improving the efficiency of handling routing failures in the SDN network.

### BRIEF DESCRIPTION OF THE DRAWINGS

The drawings described herein are for better understanding of the present application, and are a part of the present application, and exemplary embodiments and description thereof of the present application are for explaining the present application, but do not limit the present application improperly. In the Drawings:
FIG. 1 is a schematic diagram of an optional computer terminal according to an embodiment of the present disclosure;
FIG. 2 is a flow chart of optional service recovery according to an embodiment of the present disclosure;
FIG. 3 is a flow chart of optional service recovery according to an embodiment of the present disclosure;
FIG. 4 is a flow chart illustrating a parallel recovery method for multiple services in an SDN architecture according to an embodiment of the present disclosure;
FIG. 5 is a flow chart illustrating another parallel recovery method for multiple services in an SDN architecture according to an embodiment of the present disclosure;
FIG. 6 is a flow chart illustrating an optional parallel recovery method for multiple services in an SDN architecture according an embodiment of the present disclosure;
FIG. 7 is a schematic diagram of an optional OXM data structure according to an embodiment of the present disclosure;
FIG. 8 is a schematic diagram of an optional flow_mod message according to an embodiment of the present disclosure;
FIG. 9 is a schematic diagram of an optional packet_in message according to an embodiment of the present disclosure;
FIG. 10 is a schematic diagram of an optional network topology according to an embodiment of the present disclosure;
FIG. 11 is a flow chart illustrating an optional parallel recovery method for multiple services in an SDN architecture according to an embodiment of the present disclosure;
FIG. 12 is a flow chart illustrating an optional parallel recovery method for multiple services in an SDN architecture according to an embodiment of the present disclosure;
FIG. 13 is a flow chart illustrating an optional parallel recovery method for multiple services in an SDN architecture according to an embodiment of the present disclosure;
FIG. 14 is a flow chart illustrating an optional parallel recovery method for multiple services in an SDN architecture according to an embodiment of the present disclosure;
FIG. 15 is a schematic diagram of a parallel recovery apparatus for multiple services in an SDN architecture according to an embodiment of the present disclosure; and
FIG. 16 is a schematic diagram of another parallel recovery apparatus for multiple services in an SDN architecture according to an embodiment of the present disclosure.

### DETAILED DESCRIPTION

The present application will be described in detail below in conjunction with drawings and embodiments. It should be noted that the embodiments/characteristics in the embodiments may be combined with each other if there is no conflict.

It should be noted that terms "first" and "second" and the like used in the description, claims and the drawings of the present application are just for distinguishing similar objects, but not necessarily for describing a particular order or a sequence.

Firstly, some nouns or terms in the description of the embodiments of the present application are explained as follows.
- SDN:: Software Defined Network
- PTN:: Packet Transport Network
- OTN:: Optical Transport Network
- SNC:: Sub Network Connect
- OIF:: Optical Internetworking Forum
- ONF:: Open Networking Foundation
- OTWG:: Optical Transport Working Group
- OFP:: OpenFlow Protocol
- OXM:: OpenFlow Extensible Match
- ODU:: Oracle Database Unloader

### First Embodiment

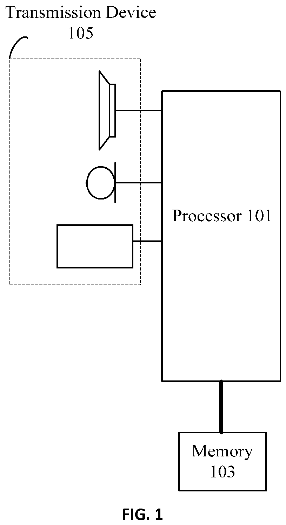

A method embodiment provided by the First Embodiment of the present application may be implemented in a mobile terminal, a computer terminal or a similar computing device. Taking an implementation in a computer terminal as an example, as shown in FIG. 1, a computer terminal may include one or more processors 101 (only one processor is shown in FIG. 1, and the processors 101 may include, but are not limited to, processing devices such as microprocessors MCUs or programmable logic devices FPGAs), a memory 103 configured to store data, and a transmission device 105 configured to perform communication functions. It can be understood by those of ordinary skill in the art that the structure shown in FIG. 1 is only for the purpose of illustration, but does not limit the structure of the above electronic device.

The above terminal may be an SDN device or an OTN device.

The memory 103 may be configured to store software programs and modules of application software, such as program instructions/modules corresponding to a control method for the devices in the embodiment of the present application, and the processors 101 execute various functional applications and data processing by running the software programs and the modules stored in the memory 103, that is, to implement the above method. The memory may include high speed random access memories, and may further include non-volatile memories, such as one or more magnetic storage devices, flash memories, or other non-volatile solid state memories. In some examples, the memory may further include memories which are remotely arranged relative to the processor, which may be connected to the computer terminal via a network. Examples of such network include, but are not limited to, the Internet, intranets, local area networks, mobile communication networks, and combinations thereof.

The processor may be an SDN controller of the SDN device and an OTN controller of the OTN device.

The memory may be a first memory of the SDN device and a second memory of the OTN device.

The transmission device is configured to receive or send data via a network. Specific examples of the network may include a wireless network provided by a communication provider of the computer terminal. In one example, the transmission device includes a network interface controller, called NIC, which may be connected to other network devices via a base station so as to communicate with the Internet. In another example, the transmission device may be a radio frequency module, called RF module, configured to communicate with the Internet in a wireless manner.

The transmission device may be a first transmission device of the SDN device and a second transmission device of the OTN device.

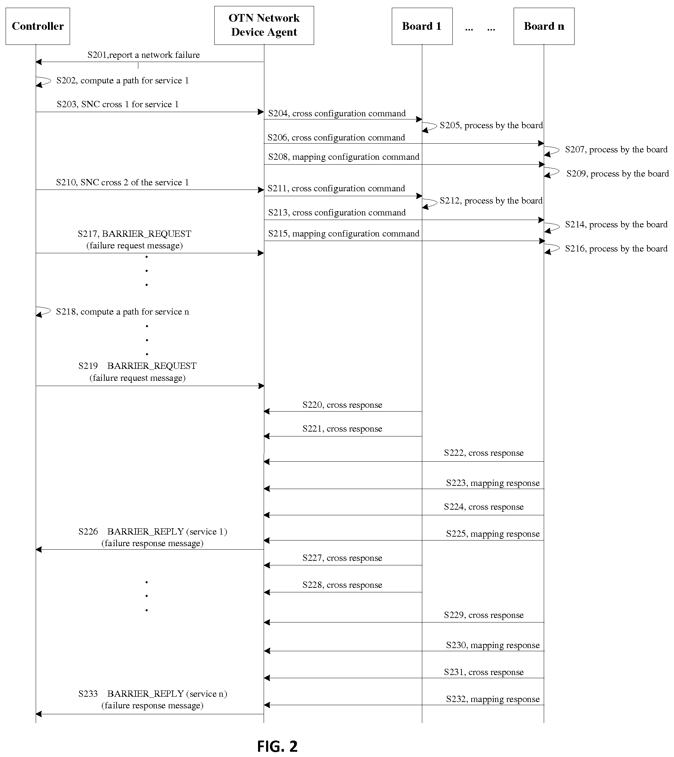

OpenFlow protocol (OpenFlow is a new network protocol, and is a standard protocol between controllers and switches) is a widely recognized southbound protocol between controllers and network devices in an SDN architecture. OTWG organization of ONF has been performing OTN extension to OFP. According to the latest extended version, one flow_mod message may be configured with a unidirectional SNC cross of a single OTN service, and a controller, an OTN network device agent, and boards (board 1 to board n) interact with each other in a way shown in FIG. 2.

At step S201, a network failure is reported.

At step S202, a path for service 1 is computed.

At step S203, cross information of SNC cross 1 of the service 1 is carried by a FLOW_MOD message.

At step S204, a cross configuration command of SNC1 is sent to board 1.

At step S205, the cross configuration command is processed by the board 1.

At step S206, the cross configuration command of SNC1 is sent to board n.

At step S207, the cross configuration command is processed by the board n.

At step S208, a mapping configuration command of SNC1 is sent to the board n.

At step S209, the mapping configuration command is processed by the board n.

At step S210, cross information of SNC cross 2 of the service 1 is carried by a FLOW_MOD message.

At step S211, a cross configuration command of SNC2 is sent to the board 1.

At step S212, the cross configuration command is processed by the board 1.

At step S213, the cross configuration command of SNC2 is sent to the board n.

At step S214, the cross configuration command is processed by the board n.

At step S215, a mapping configuration command of SNC2 is sent to the board n.

At step S216, the mapping configuration command processed by the board n.

At step S217, a BARRIER_REQUEST message of the service 1 is sent, so as to request to return a processing result.

At step S218, a path for service n is computed, and the processing after computation is same as above, which will not be described herein.

At step S219, a BARRIER_REQUEST of the service n is sent.

At step S220, an SNC1 cross response of the service 1 is sent.

At step S221, an SNC2 cross response of the service 1 is sent.

At step S222, an SNC1 cross response of the service 1 is sent.

At step S223, an SNC1 mapping response of the service 1 is sent.

At step S224, an SNC2 cross response of the service 1 is sent.

At step S225, an SNC2 mapping response of the service 1 is sent.

At step S226, a BARRIER_REPLY message of the service 1 is sent.

At step S227, an SNC1 cross response of the service n is sent.

At step S228, an SNC2 cross response of the service n is sent.

At step S229, an SNC1 cross response of the service n is sent.

At step S230, an SNC1 mapping response of the service n is sent.

At step S231, an SNC2 cross response of the service n is sent.

At step S232, an SNC2 mapping response of the service n is sent.

At step S233, a BARRIER_REPLY message of the service n is sent.

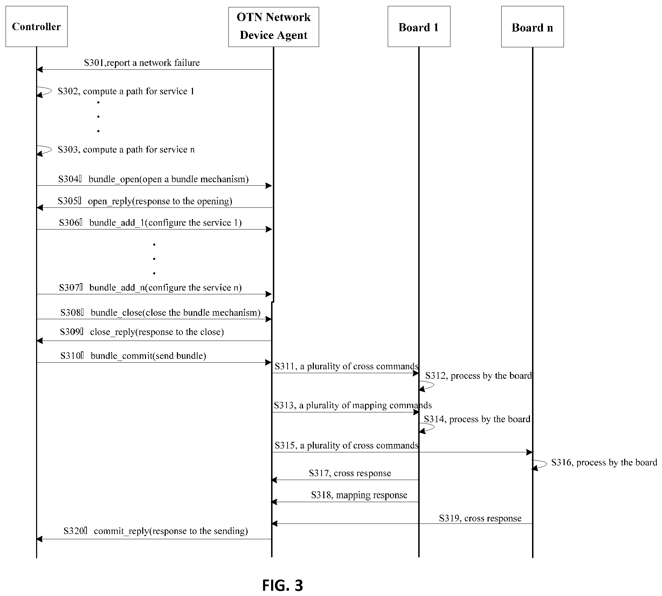

In the above way, multi-service recovery service in the OTN network is performed without using a bundle mechanism, and unlike a packet switching device, an OTN network device based on time slot and wavelength switching has a complicated configuration process. For the same OTN board, the processing manner of frequently executing single cross configuration and single mapping configuration is less efficiency and time consuming. In order to improve configuration efficiency, each cross configuration and each mapping configuration may be combined together and sent to the board for configuration at one time, which may improve processing efficiency of the board and reduce consumed time. When the OTN network device uses an extended protocol based on the OFP v1.4.0 and later versions, the bundle mechanism can be used to package a plurality of SNC crosses of multiple services, and a schematic diagram of a recovery process is shown in FIG. 3.

At step S301, a network failure is reported.

At step S302, a path for service 1 is computed.

At step S303, a path for service n is computed.

At step S304, a bundle_open message is sent, to start a bundle mechanism.

At step S305, an open_reply message is sent in response to the start of the bundle mechanism.

At step S306, a bundle_add_1 message is carried by a flow_mod message, and cross configuration information related to the board 1 is packaged into the bundle_add_1 message for sending.

At step S307, a bundle_add_n message is carried by a flow_mod message, and cross configuration information related to the board n is packaged into the bundle_add_n message for sending.

At step S308, a bundle_close message is sent, to close the bundle mechanism.

At step S309, a close_reply message, which is a response message of successful close, is sent.

At step S310, a bundle_commit message used for triggering a configuration function of the board is sent, and return of a configuration result is requested.

At step S311, a plurality of cross commands for configuring the service 1 to the service n is sent.

At step S312, cross configuration commands is processed by the board 1.

At step S313, a plurality of mapping commands for the service 1 to the service n are configured.

At step S314, the cross configuration commands are processed by the board n.

At step S315, a plurality of cross commands for the service 1 to the service 3 are configured.

At step S316, the plurality of cross configuration commands are processed by the board n.

At step S317, a cross response is sent.

At step S318, a mapping response is sent.

At step S319, a cross response is sent.

At step S320, commit_reply, the configuration result is returned to the controller.

How to achieve recovery for multiple services at the same time in the OTN network in the SDN architecture so as to improve recovery performance for multiple services and shorten service failure time is a very severe problem. By using the above bundle mechanism, the processing efficiency may be increased to some extent, but the recovery performance is still affected due to low signaling interaction efficiency.

According to an aspect of the embodiment of the present application, a method embodiment of recovery method for multiple services in an SDN architecture is provided. It should be noted that the steps shown in the flow charts in the drawings may be executed by such as a computer system having a group of computer executable commands. Moreover, although a logical order is shown in the flow charts, in some cases, the steps shown or described may be performed in a different order other than the one described herein.

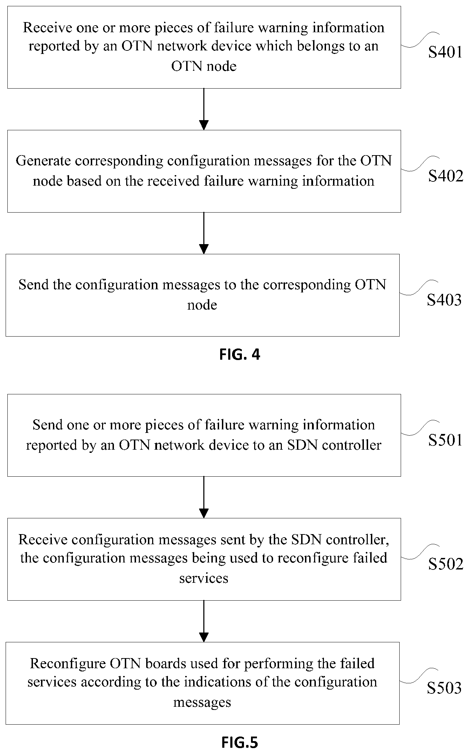

FIG. 4 is a flow chart illustrating a parallel recovery method for multiple services in an SDN architecture according to the embodiment of the present application. As shown in FIG. 4, the method includes the following steps S401-S403.

At step S401, at least one piece of failure warning information reported by an OTN network device which belongs to an OTN node is received.

At step S402, corresponding configuration messages for the OTN node is generated based on the received failure warning information, the configuration messages being used to reconfigure all failed services at the OTN node.

At step S403, the configuration messages are sent to the corresponding OTN node.

Optionally, the OTN node may configure a same OTN board by using configuration commands corresponding to the same OTN board in the configuration messages.

According to the above embodiment, at least one piece of failure warning information reported by an OTN network device which belongs to an OTN node is received; corresponding configuration messages are generated for the OTN node based on the received failure warning information, wherein the configuration messages are used to reconfigure all failed services at the OTN node; and the configuration messages are sent to the corresponding OTN node, and all configuration related information of a certain node is sent via one message packet, which solves the technical problem of low efficiency of handling routing failure in the SDN network in existing art, and achieves a technical effect of improving the efficiency of handling routing failures in the SDN network.

It should be noted that the aforesaid configuration messages include flow_mod messages, and an executive body of the aforesaid method may be a controller in the OTN network, but is not limited thereto.

In the step S402, the step of generating the corresponding configuration messages for the OTN node based on the received failure warning information includes: determining a recovery path for a failed service according to the failure warning information; determining SNC cross information corresponding to the recovery path; and generating configuration messages containing all SNC cross information for operating the OTN node.

Optionally, determining the recovery path for the failed service according to the failure warning information refers to acquiring failure location information of the failed service from the failure warning information; and generating the recovery path for the failed service according to the failure location information. Determining SNC cross information corresponding to the recovery path refers to acquiring path information of the recovery path; and converting the path information of the recovery path to SNC cross information.

Optionally, after the configuration messages are sent to the corresponding OTN node, a configuration result may be obtained in a following manner: sending preset information to the OTN node, wherein the preset information is used to instruct the OTN node to feed back the configuration result; and receiving feedback information for indicating the configuration result sent from the OTN node.

According to another aspect of the embodiment of the present application, a method embodiment of a recovery method for multiple services in an SDN architecture is provided. As shown in FIG. 5, the method includes the following steps S501-S503.

At step S501, at least one piece of failure warning information reported by an OTN network device is sent to an SDN controller.

At step S502, configuration messages sent by the SDN controller is received, the configuration messages being used to reconfigure failed services.

At step S503, OTN boards used for performing the failed services are reconfigured according to the configuration messages.

According to the aforesaid embodiment, at least one piece of failure warning information reported by an OTN network device are sent to the SDN controller; the configuration messages sent by the SDN controller are received, the configuration messages being used to reconfigure the failed services; and the OTN boards used for performing the failed services are reconfigured according to the configuration messages, and all configuration related information is acquired by a certain node through receiving one message packet, which solves the technical problem of low efficiency of handling routing failure in the SDN network in existing art, and achieves a technical effect of improving the efficiency of handling routing failures in the SDN network.

It should be noted that the configuration messages include flow_mod messages, each flow_mod message carriers a plurality of pieces of SNC cross information, an executive body of the aforesaid method may be an OTN node in an OTN network, the OTN node is an OTN network device node (equivalent to an agent node in an OTN network device), but is not limited thereto.

In the aforesaid Step S503, reconfiguring OTN boards for performing the failed services according to the configuration messages includes: generating at least one configuration command for configuring the OTN boards according to the configuration messages; and carrying the configuration commands for configuring a same OTN board in a configuration request, and sending the configuration request to the corresponding OTN board. Therefore, the purpose of improving configuration efficiency is achieved by using one configuration request to carry the configuration commands for multiple services.

Optionally, generating at least one configuration command for configuring the OTN boards according to the configuration messages may be implemented by acquiring at least one piece of SNC cross information from the configuration messages; and converting the at least one piece of SNC cross information into at least one configuration command. Carrying the configuration commands for configuring a same OTN board in a configuration request, and sending the configuration request to the corresponding OTN board includes: generating a TLV data packet corresponding to the configuration commands in a TLV format; and carrying the TLV data packet for configuring the same OTN board in the configuration request and sending the configuration request to the corresponding OTN board.

Optionally, after the OTN boards for performing the failed service are reconfigured according to the configuration messages, while receiving preset information sent by the SDN controller, configuration results of the reconfigured OTN boards are collected according to the preset information; the collected configuration results are carried in feedback information to feed back to the SDN controller, wherein the feedback information contains identification information of an OTN board which fails to be reconfigured.

Optionally, collecting the configuration results of the reconfigured OTN boards according to the preset information includes: receiving information sent by the OTN board which indicates that reconfiguration fails; receiving information sent by the OTN board which indicates that reconfiguration succeeds; and, if no configuration result of the OTN board is received within preset time, using configuration timeout as the configuration result of the OTN board.

In the aforesaid embodiment, a parallel recovery method for multiple services based on extensions of the OpenFlow protocol is provided. With the method, a plurality of SNC crosses for operating multiple services of a same OTN network device node are carried in one flow_mod message for delivery, and then a plurality of configuration commands of a same kind for operating a same board are carried in one configuration request for delivery by the OTN network device node according to the boards to be operated by the SNC crosses, which not only simplifies signaling message interaction between the controllers and the network devices, but also increases configuration processing efficiency of the OTN boards, thereby improving parallel recovery performance for multiple services of the OTN network in the SDN architecture and shortening service failure time. If the OTN network device fails to execute the SNC crosses, a packet_in message may be used to report which SNC cross is failed to be executed.

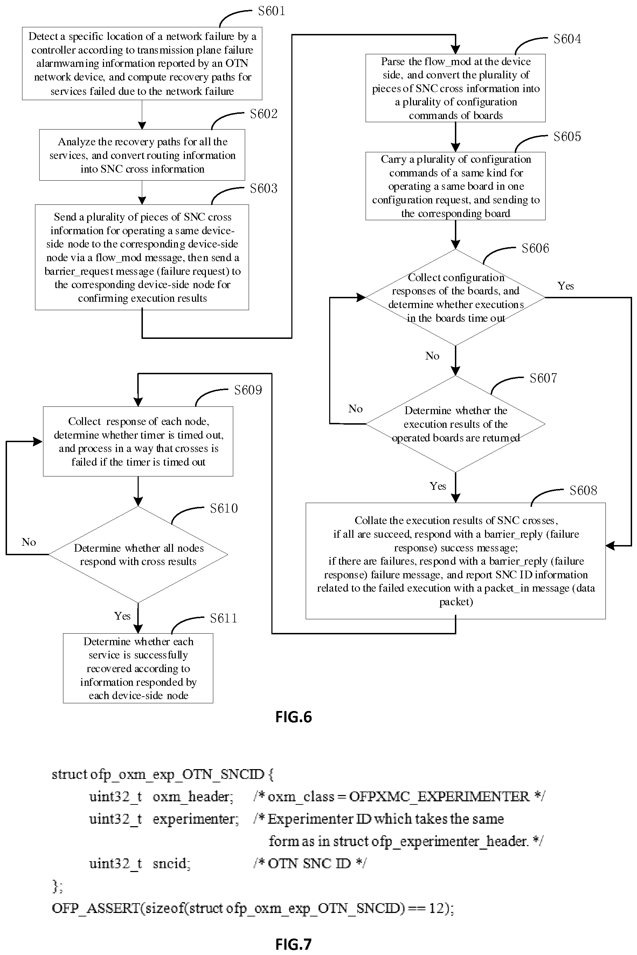

The embodiment of the present application will be described in detail in conjunction of FIG. 6, as shown in FIG. 6.

At step S601, when there is an interruption of an optical fiber in the OTN network, a controller detects a specific location of a network failure according to transmission plane failure warning information (i.e., the failure warning information) reported by an OTN network device, and computes recovery paths for services failed due to the network failure according to the failure location.

At step S602, after computation of the recovery paths for all the failed services are completed, the recovery paths for all the services are analyzed, and routing information is converted into SNC cross information, which specifically include analyzing the recovery paths which are successfully computed, and converting each recovery path information into a plurality of pieces of SNC cross information.

At step S603, according to OTN network device nodes to be operated by the SNC crosses, a plurality of pieces of SNC cross information for operating a same device-side node are sent to the corresponding device-side node (i.e., the OTN node) via a flow_mod message, then a barrier_request message is sent to the corresponding device-side node for confirming execution results, and a signaling timeout timer is activated for every operated device-side node for confirming whether a barrier_reply response message times out. It is possible to set a signaling timeout period, whose default value is a minimum multipart_reply timeout period specified in an OFP standard, that is, 1 second.

At step S604, the OTN network device-side node receives and parses the flow_mod message sent by the SDN controller, and converts the plurality of pieces of SNC cross information into a plurality of configuration commands for operating OTN boards.

At step S605, the configuration commands are classified according to each board to be operated by the configuration commands. A plurality of configuration commands of the same kind to be used for operating a same board are carried in one configuration request, and are then sent the configuration request to the corresponding board, and a cross timeout timer is activated for every operated board. It is possible to set a cross timeout period. In the present application, a default value of cross timeout is set to 500 milliseconds according to dynamic performance indicators of the OTN network device.

After receiving the barrier_request message sent by the controller, each device-side node waits for each board to return the execution result, and then responds to the controller with a barrier_reply message, details of which are described in following steps.

At step S606, configuration responses of the boards are collected, and it is determined whether executions in the boards time out, that is, the execution result of the configuration commands of each board is collected, and it is determined whether the cross timeout timers are timed out, and if yes, Step S608 is performed to process in a way that configuration is failed, otherwise, Step S607 is performed.

At step S607, it is determined whether the execution result of each configuration command of all the boards which need to operate are returned, and if yes, the Step S608 is performed, otherwise, the Step S606 is performed again.

At step S608, the execution results of SNC crosses of all the configuration commands of all the boards are collated, if all the commands are successfully executed, the controller is responded with a barrier_reply success message, and, if there is a board fails to execute the commends, the controller is responded with a barrier_reply failure message, and SNC ID information (identification information of the SNC board) related to the failed execution is reported with a packet_in message.

At step S609, the controller collects the execution results of SNC crosses of each device-side nodes, determines whether the signaling timeout timer is timed out, and operates the device-side node in a way that the cross is failed if the timer is timed out.

At step S610, it is determined whether all the device-side nodes have returned the execution results of the SNC crosses, and if yes, Step S611 is performed, otherwise, the Step S610 is performed again.

At step S611, the controller determines whether each service is successfully recovered according to a cross configuration result (i.e., the responded message) from each device-side node. If each node responds to the controller with a barrier_reply success message, each service is successfully recovered. If there is a device-side node responds to the controller with a barrier_reply failure message, a recovery result of each service is determined according to the SNC ID information reported by the packet_in message, and the process is ended.

In the aforesaid embodiment, an extension is performed based on the latest version of the OpenFlow protocol to package a plurality of pieces of SNC cross configuration information in one flow_mod message and send the flow_mod message to the device-side node, which improves interaction and processing efficiencies of southbound signaling. The extension is as follows.

A definition of OFXXMT_EXP_OTN_SNCID is added to ofp_experimenters_field to indicate an extension type of OXM (a mapping between data entity objects and XML nodes is called OXM). An OXM data structure of OFP_OXM_EXP_OTN_SNCID is defined as shown in FIG. 7.

The field "ofp_experimenters_field" is a field specified in "onf2015.569_04" in optical layer protocol extension of the OpenFlow protocol for indicating specific extension type content, and the present application makes an extension based on the "onf2015.569_04" protocol standard to add a content of OTN_SNCID.

The field "OFPXMT_EXP_OTN_SNCID" is a new content defined by the Openflow protocol extended by the present application for enabling one flow_mod message to carry a plurality of pieces of SNC information, and is used for indicating an ID value of an SNC cross. Only contents corresponding to such field can be used to accurately identify and distinguish each SNC cross information. Therefore, the purpose of accurately positioning and operating each SNC cross when a plurality of SNC crosses are carried in one flow_mod message can be achieved.

It should be noted that SNC is defined in an ITU-T G.8080 standard as a sub network connect that indicates a dynamic relationship between two sub network points on a boundary of a same sub network, that is, an inbound port with an inbound label and an outbound port with an outbound label which specify a stream. A data stream may be configured with the inbound and outbound information. Since the inbound port with the inbound label are stored separately from the outbound port with the outbound label, an existing flow_mod message can only carry one piece of SNC cross information instead of pieces of SNC cross information The present application extends the protocol to newly define a content of SNC ID, so as to establish a relationship between the separately stored inbound port with inbound label and outbound port with outbound label, thereby ensuring that a plurality of pieces of SNC cross information may be formed orderly and accurately with the separate inbound port with inbound label and outbound port with outbound label.

In FIG. 7, ofp_oxm_class of oxm_header is filled in with OFXXMC_EXPERIMENTER, and ofp-oxm_field is filled in with OFPXMT_EXP_OTN_SNCID added by the extension according to the present application. Experimenter is filled in with OFP_OTWG_EXPERIMENTER_ID to indicate an extended OXM structure. Values of sncid are unique numbers of the device-side nodes, and different SNC crosses are numbered by using the sncid. According to the standards of the OpenFlow protocol, a signal type, an inbound port and an inbound label of an SNC cross should be placed in a match domain of a flow_mod message, and an outbound port and an outbound label of the SNC cross should be placed in an instruction domain of the flow_mod message. Therefore, a complete piece of SNC cross information can be obtained after the match domain and the instruction domain of the flow_mod message are parsed separately.

Since a plurality of SNC crosses are to be packaged in one flow_mod message, different SNC crosses are numbered by using the sncid, so that it is possible to establish a one-to-one correspondence between a plurality of pieces of inbound SNC information allocated in the match domain and a plurality of pieces of outbound SNC information allocated in the instruction domain according to the values of the sncid, thereby each SNC cross information can be completely combined while the flow_mod message is parsed.

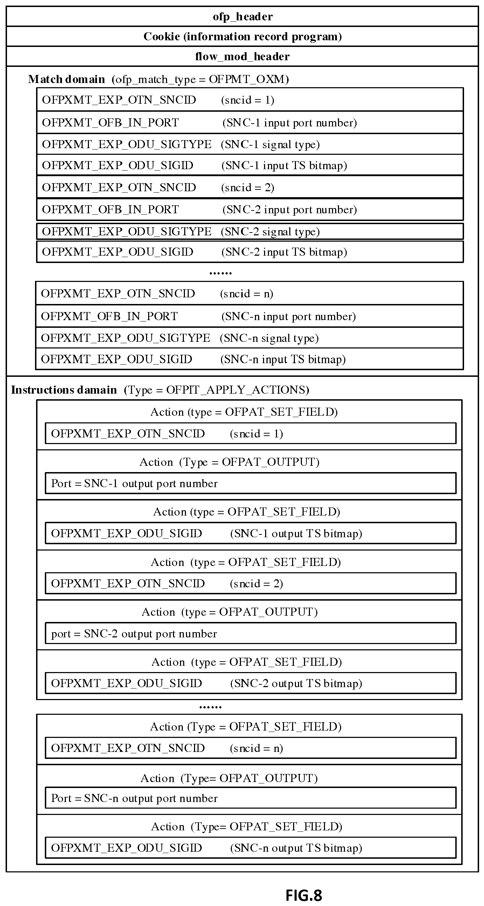

The flow_mod message is written by numbering, via OTN_SNCID, signal type information, inbound port information and inbound label information of a plurality of SNC crosses in the match domain, and separately filling them in a plurality of OXMs in sequence. Outbound port information and outbound label information of the plurality of SNC crosses are distinguished via OTN_SNCID in the instruction domain, and are filled in a plurality of actions. For a same SNC, the value of the sncid in the match domain should be consistent with the value of the sncid in the instruction domain, and FIG. 8 shows an example of the extended flow_mod message (please refer to the related description and the relevant definition of the flow_mod message of FIG. 7 for a meaning of the message shown in FIG. 8).

In the above embodiment, the plurality of configuration commands of the same kind that are set for the same OTN board are placed in one configuration request and sent to the OTN board, which improves a processing efficiency of the board.

The configuration commands for an OTN board include: cross, mapping, wavelength assignment, wavelength tuning, and so on. In the present application, the plurality of configuration commands of the same kind are placed in one request in TLV format and sent to the corresponding board in a TLV format. Taking a cross configuration command as an example, the configuration request carries a total length of a plurality of TLVs, and each TLV carries a specific cross command which contains execution type, source board, source branch information, target board, and target branch information, and so on.

In the above embodiment, when the OTN network device fails to execute the configuration commands, and a new process is added according to the present application to use an extended packet_in message (which is a type of messages defined in the OpenFlow protocol) to report the SNC ID information related to the failed execution, so as to enable the controller to position the service which failed to execute the crosses, thereby making the parallel recovery process for multiple services more complete. A specific extension of the packet_in message is as follows.

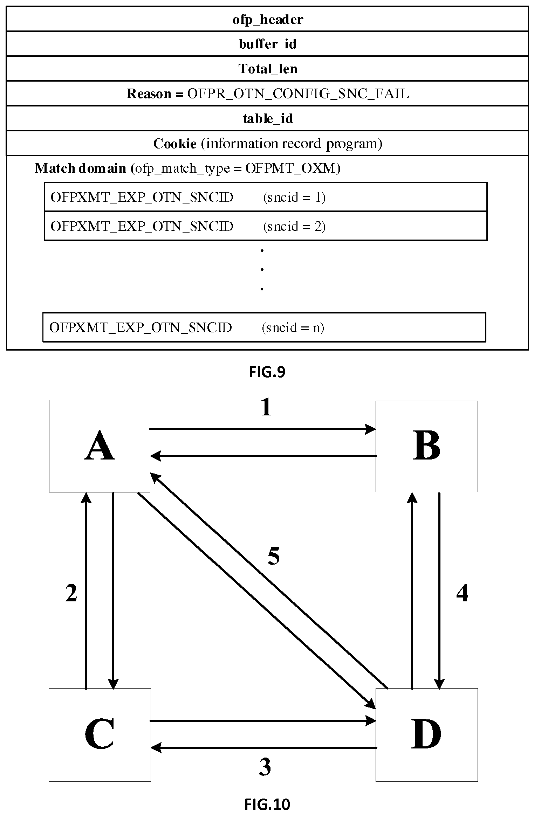

A definition of OFPR_OTN_CONFIG_SNC_FAIL is added into ofp_packet_in_reason to indicate a reported reason of "SNC configuration failure". An extended OXM structure OFP_OXM_EXP_OTN_SNCID according to the present application is filled in the match domain of the packet_in message, wherein, the ofp_oxm_class of the oxm_header is filled in with OFPXMC_EXPERIMENTER, and the ofp-oxm_field is filled in with FPXMT_EXP_OTN_SNCID added by the extension according to the present application, and experimenter is filled in with OFP_OTWG_EXPERIMENTER_ID to indicate the extended OXM structure. The sncid is filled in with a value of sncid which fails to execute SNC crosses, and FIG. 9 shows an example of the extended packet_in message.

The embodiments of the present application are described in detail below in conjunction with specific implementations.

An initial network topology is shown in FIG. 10, the network is a pure ODU layer network, and has four OTN network device nodes therein, which are Nodes A, B, C, and D respectively. In the network, there are five ODU layer links in total with link numbers of 1 to 5, respectively, a bandwidth of each link is 100G (ODU4), there are 80 unprotected ODUO services between Node A and Node B, and paths of all the services are from Node A to Node B (Link 1).

### First Implementation

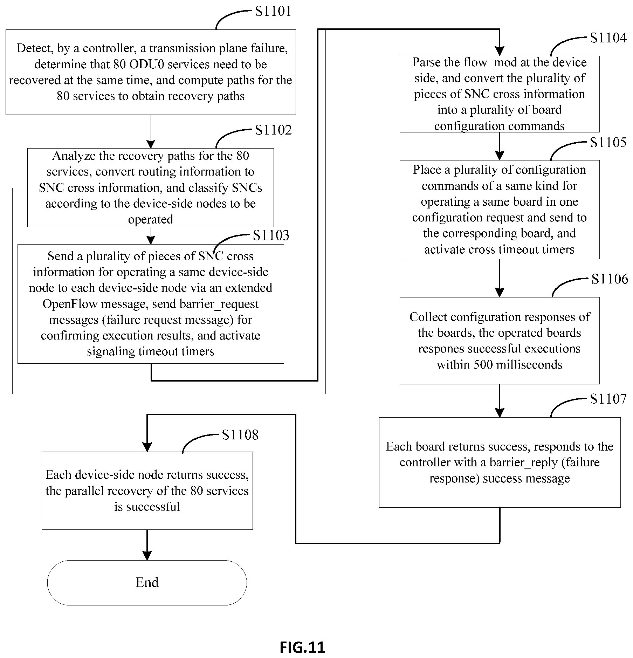

Assuming that there is a failure in Link 1, and 80 services are successfully recovered in parallel, as shown by steps S1101-S1108 in FIG. 11.

At step S1101, a controller detects that Link 1 is interrupted (i.e., a transmission plane failure) according to warning information reported from a device side. According to a failure location, it is determined that 80 ODUO services need to be recovered at the same time. Path computation is preformed for the 80 services to figure out that recovery paths for all the 80 services are from Node A to Node D (Link 5), and then to Node B(Link 4).

At step S1102, the recovery paths for the 80 services are analyzed, routing information is converted into SNC cross information, and SNCs are classified according to the device-side nodes to be operated. Specifically, the routing information of each service is converted into a plurality of pieces of SNC cross information, and the plurality of pieces of SNC cross information for operating Nodes A, D, and B are separately analyzed and combined to finally generate three sets of cross data: an SNC cross data packet for Node A, an SNC cross data packet for Node D, and an SNC cross data packet for Node B.

At step S1103, according to the OFP extension method provided by the present application, the three sets of SNC cross data packets are packaged into three flow_mod messages respectively, the plurality of pieces of SNC cross information for operating a same device-side node are sent to eachdevice-side node via an extended OpenFlow message respectively, that is, are sent to the three device-side Nodes A, D, and B respectively, barrier_request messages are sent for confirming execution results, and signaling timeout timers are activated, that is, the barrier_request messages are sent to the device-side Nodes A, D, and B respectively for confirming the execution results of the crosses, and the signaling timeout timers are activated, with a timeout period being Is.

At step S1104, the flow_mod messages are parsed at the device side, and the plurality of pieces of SNC cross information are converted into a plurality of board configuration commands. Specifically, the three device-side Nodes receive the flow_mod messages respectively, and parse information about inbound ports and outbound ports and labels in the match domains and the instructios domains according to the extended OTN_SNCID so as to form each SNC cross information.

At step S1105, each SNC cross information is analyzed and is converted into one or more board configuration commands, the configuration commands are classified according to the boards to be operated, a plurality of configuration commands of a same kind for operating a same board are placed in one configuration request and are sent to the corresponding board, and cross timeout timers are activated, with a timeout period being 500 milliseconds.

At step S1106, the execution result (i.e., configuration response information) of each configuration command of the boards is collected, and all the operated boards respond with successful executions within 500 milliseconds. After receiving the barrier_request messages, the three device-side Nodes respond to the controller with barrier_reply success messages.

At step S1107, an SDN controller respectively receives the barrier_reply success messages from the three OTN network device Nodes A, D, and B within Is, and responds to the controller with a barrier_reply success message.

At step S1108, each device-side node return the barrier_reply success message, and the parallel recovery for the 80 services is successful, that is, all the 80 ODUO services are successfully recovered, and the process is ended.

### Second Implementation

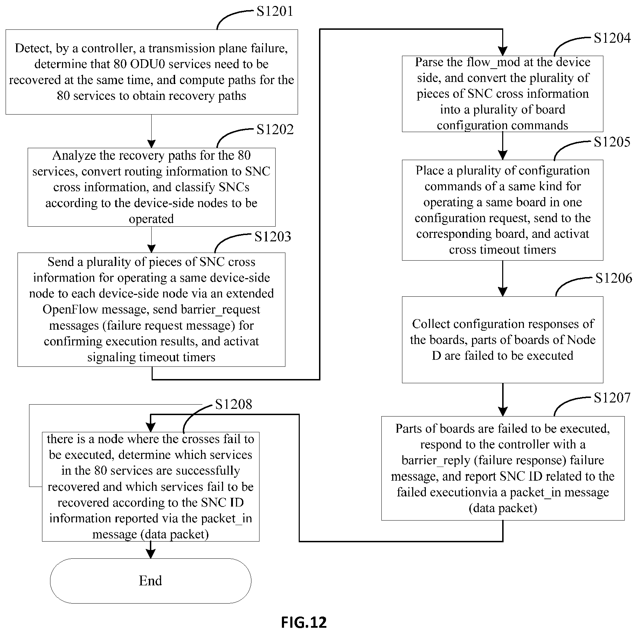

Assuming that there is a failure in Link 1, and part of the 80 services are successfully recovered but the remaining services of the 80 services fail to be recovered due to failed executions of the crosses at the device-side Nodes. FIG. 12 shows a flow chart of the implementation.

At step S1201, a controller detects that Link 1 is interrupted (i.e., a transmission plane failure) according to warning information reported from a device side. According to a failure location, it is determined that 80 ODUO services need to be recovered at the same time. Path computation is preformed for the 80 services to figure out that recovery paths for all the 80 services are from Node A to Node D (Link 5), and then to Node B (Link 4).

At step S 1202, the recovery paths for the 80 services are analyzed, routing information is converted into SNC cross information, and SNCs are classified according to the device-side nodes to be operated. Specifically, the routing information of each service is converted into a plurality of pieces of SNC cross information, and the plurality of pieces of SNC cross information for operating Nodes A, D, and B are separately analyzed and combined to finally generate three sets of cross data: an SNC cross data packet for Node A, an SNC cross data packet for Node D, and an SNC cross data packet for Node B.

At step S1203, according to the OFP extension method provided by the present application, the three sets of SNC cross data packets are packaged into three flow_mod messages respectively, the plurality of pieces of SNC cross information for operating a same device-side node are sent to each device-side node via an extended OpenFlow message respectively, that is, are sent to the three device-side Nodes A, D, and B respectively, barrier_request messages are sent for confirming execution results, and signaling timeout timers are activated, that is, the barrier_request messages are sent to the device-side Nodes A, D, and B respectively for confirming the execution results of the crosses, and the signaling timeout timers are activated, with a timeout period being Is.

At step S1204, the flow_mod messages are parsed at the device side, and the plurality of pieces of SNC cross information are converted into a plurality of board configuration commands. Specifically, the three device-side Nodes receive the flow_mod messages respectively, and parse information about inbound ports and outbound ports and labels in the match domains and the instruction domains according to the extended OTN_SNCID so as to form each SNC cross information.

At step S 1205, each SNC cross information is analyzed and is converted into one or more board configuration commands, the configuration commands are classified according to the boards to be operated, a plurality of configuration commands of a same kind for operating a same board are placed in one configuration request and are sent to the corresponding board, and cross timeout timers are activated, with a timeout period being 500 milliseconds.

At step S 1206, the execution result (i.e., configuration response information) of each configuration command of the boards is collected, all the operated boards respond with the execution results within 500 milliseconds, but part of boards at Node D fails to execute crosses. After the three device-side Nodes receive the barrier_request messages, Nodes A and B respond to the controller with barrier_reply success messages, but Node D responds to the controller with a barrier_reply failure message, and reports SNC ID related to the failed execution to the controller via a packet_in message according to the configuration commands that failed to be executed.

At step S 1207, part of the boards respond the controller with a barrier_reply failure message in responding to failed execution, and reports the SNC ID information related to the failed execution via the packet_in message, the SDN controller receives, within Is, the barrier_reply success messages from Nodes A and B respectively and the barrier_reply failure message from Node D, and parses the SNC ID in the packet_in message reported by Node D, so as to determine which services in the 80 ODUO services are successfully recovered and which services are failed to be recovered, and to end the process.

At step S1208, at a node where the crosses are failed to be executed, it is determined which services in the 80 services are successfully recovered and which services are failed to be recovered according to the SNC ID information reported via the packet_in message.

### Third Implementation

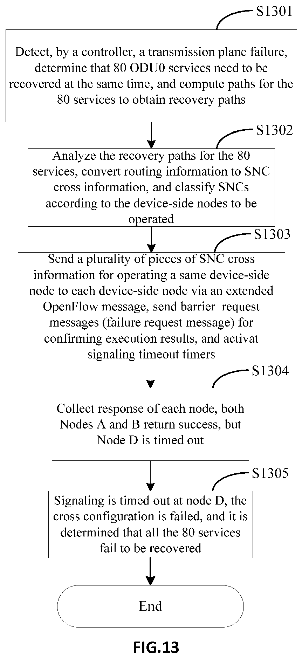

Assuming that there is a failure in Link 1, signaling timeout occurs due to interruption of southbound signaling between the controller and the device side, so that parallel recover of the 80 services fails, the flow chart of which is shown in FIG. 13.

At step S1301, a controller detects that Link 1 is interrupted (i.e., a transmission plane failure) according to warning information reported from a device side. According to a failure location, it is determined that 80 ODUO services need to be recovered at the same time. Path computation is preformed for the 80 services to figure out that recovery paths for all the 80 services are from Node A to Node D (Link 5), and then to Node B (Link 4).

At step S 1302, the recovery paths for the 80 services are analyzed, routing information is converted into SNC cross information, and SNCs are classified according to the device-side nodes to be operated. Specifically, the routing information of each service is converted into a plurality of pieces of SNC cross information, and the plurality of pieces of SNC cross information for operating Nodes A, D, and B are separately analyzed and combined to finally generate three sets of cross data: an SNC cross data packet for Node A, an SNC cross data packet for Node D, and an SNC cross data packet for Node B.

At step S1303, according to the OFP extension method provided by the present application, the three sets of SNC cross data packets are packaged into three flow_mod messages respectively, the plurality of pieces of SNC cross information for operating a same device-side node are sent to each device-side node via an extended OpenFlow message respectively, that is, are sent to the three device-side Nodes A, D, and B respectively, barrier_request messages are sent for confirming execution results, and signaling timeout timers are activated, that is, the barrier_request messages are sent to the device-side Nodes A, D, and B respectively for confirming execution results of the crosses, and the signaling timeout timers are activated, with a timeout period being Is.

At step S1304, responses from each Node are collected, both Nodes A and B successfully return the responses, but Node D is timed out. Since signaling between the controller and Node D fails, the flow_mod message and the barrier_request message, which are sent by the controller, cannot be received by Node D. Nodes A and B receive the flow_mod messages and the barrier_request messages, successfully execute the crosses, and respond to the controller with the barrier_reply success messages.

At step S 1305, signaling timeout occurs at Node D, cross configuration fails, and it is determined that all the 80 services fail to be recovered. The SDN controller, within Is, only receives the barrier_reply success messages from Nodes A and B, but does not receive a barrier_reply message from Node D, so that it is determined that executions of all the crosses are failed to be executed at Node D, and parallel recover of the 80 ODUO services failed. The process is ended.

### Fourth Implementation

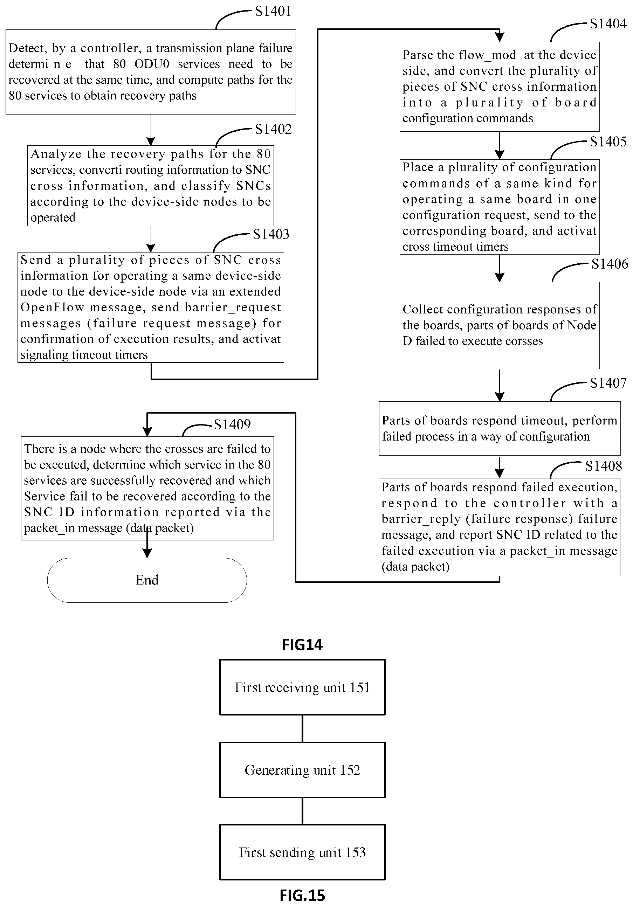

Assuming that there is a failure in Link 1, and part of the 80 services are successfully recovered but the remaining services of the 80 services fail to be recovered due to cross execution timeout at the device-side Nodes, the flow chart of which is shown in FIG. 14.

At step S1401, a controller detects that Link 1 is interrupted (i.e., a transmission plane failure) according to warning information reported from a device side. According to a failure location, it is determined that 80 ODUO services need to be recovered at the same time. Path computation is preformed for the 80 services to figure out that recovery paths for all the 80 services are from Node A to Node D (Link 5), and then to Node B (Link 4).

At step S 1402, the recovery paths for the 80 services are analyzed, routing information is converted into SNC cross information, and SNCs are classified according to the device-side nodes to be operated. Specifically, the routing information of each service is converted into a plurality of pieces of SNC cross information, and the plurality of pieces of SNC cross information for operating Nodes A, D, and B are separately analyzed and combined to finally generate three sets of cross data: an SNC cross data packet for Node A, an SNC cross data packet for Node D, and an SNC cross data packet for Node B.

At step S1403, according to the OFP extension method provided by the present application, the three sets of SNC cross data packets are packaged into three flow_mod messages respectively, the plurality of pieces of SNC cross information for operating a same device-side node are sent to each device-side node via an extended OpenFlow message respectively, that is, are sent to the three device-side Nodes A, D, and B respectively, barrier_request messages are sent for confirming execution results, and signaling timeout timers are activated, that is, the barrier_request messages are sent to the device-side Nodes A, D, and B respectively for confirming the execution results of the crosses, and the signaling timeout timers are activated, with a timeout period being Is.

At step S1404, the flow_mod messages are parsed at the device side, and the plurality of pieces of SNC cross information are converted into a plurality of board configuration commands. Specifically, the three device-side Nodes receive the flow_mod messages respectively, and parse information about inbound ports and outbound ports and labels in the match domains and the instructions domains according to the extended OTN_SNCID so as to form each SNC cross information.

At step S 1405, each SNC cross information is analyzed and is converted into one or more board configuration commands, the configuration commands are classified according to the boards to be operated, a plurality of configuration commands of a same kind for operating a same board are placed in one configuration request and are sent to the corresponding board, and cross timeout timers are activated, with a timeout period being 500 milliseconds.

At step S1406, the execution result of each configuration command of the boards is collected, parts of boards at Node D do not respond with the execution results within 500 milliseconds, and the other operated boards respond with the execution results indicating successes.

At step S1407, response timeout occurs to the parts of boards, the parts of boards are processed in a way of configuration are failed to be executed. If configuration command of the boards responses with a timeout, the configuration is considered to have failed.

At step S 1408, the controller is responded with a barrier_reply failure message, and SNC ID information related to the failure is reported via a packet_in message. After the three device-side Nodes receive the barrier_request messages, Nodes A and B respond to the controller with barrier_reply success messages, and Node D responds to the controller with a barrier_reply failure message, and reports SNC ID related to the failed execution to the controller via a packet_in message according to the configuration commands related to execution timeout.

At step S1409, since there is a node at which the crosses are failed to be executed, it is determined which services in the 80 services are successfully recovered and which services are failed to be recovered according to the SNC ID information related to the failure reported via the packet_in message. The SDN controller receives, within Is, the barrier_reply success messages from Nodes A and B respectively and the barrier_reply failure message from Node D, and parses the SNC ID in the packet_in message reported by Node D, so as to determine which services in the 80 ODUO services are successfully recovered and which services are failed to be recovered. The process is ended.

Through the above description of the Implementations, those skilled in the art may clearly understand that the method according to the above embodiments can be implemented by means of a combination of software and a necessary general hardware platform, and can also be implemented by means of hardware, but the means of the combination of software and hardware is better in many cases. Based on such understanding, the essential subject matter of the technical solution of the present application, or contribution of the technical solution of the present application to the existing art may be embodied in a software product, such as a computer software product which is stored in a storage medium (such as an ROM/RAM, a magnetic disk, and an optical disc), and includes a plurality of commands for enabling a terminal device (which may be a mobile phone, a computer, a server, or a network device, etc.) to perform the method described in each embodiment of the present application.

### Second Embodiment

The embodiments of the present application further provide a parallel recovery apparatus for multiple services in an SDN architecture. The apparatus is configured to implement the aforesaid embodiments and preferred implementations. What has been explained above will not be repeated herein. In the following description, the term "module" refers to a combination of software and/or hardware capable of performing predetermined functions. Although the apparatus described in the following embodiments is preferably implemented by software, implementations by hardware or a combination of software and hardware are also possible and can be envisaged.

FIG. 15 is a schematic diagram of a parallel recovery apparatus for multiple services in an SDN architecture according to an embodiment of the present application. As shown in FIG. 15, the apparatus may include a first receiving unit 151, a generating unit 152, and a first sending unit 153.

The first receiving unit 151 is configured to receive at least one piece of failure warning information reported by an OTN network device which belongs to an OTN node.

The generating unit 152 is configured to generate corresponding configuration messages for the OTN node based on the received failure warning information, wherein the configuration messages are used to reconfigure all failed services at the OTN node.

The first sending unit 153 is configured to send the configuration messages to the corresponding OTN node.

According to the above embodiment, the first receiving unit receives at least one piece of failure warning information reported by an OTN network device which belongs to an OTN node; the generating unit generates corresponding configuration messages for the OTN node based on the received failure warning information, wherein the configuration messages are used to reconfigure all failed services at the OTN node; and the first sending unit sends the configuration messages to the corresponding OTN node, and all configuration related information of a certain node is sent via a message packet, which solves the technical problem in existing art of low efficiency of handling routing failure in the SDN network, and achieves a technical effect of improving the efficiency of handling routing failures in the SDN network.

It should be noted that the configuration messages include flow_mod messages.

Optionally, the generating unit includes a first determining module configured to determine recovery paths for the failed services according to the failure warning information; a second determining module configured to determine SNC cross information corresponding to the recovery paths; and a first generating module configured to generate the configuration messages containing the SNC cross information for operating the OTN node.

Optionally, the first determining module includes a first acquiring submodule configured to acquire failure location information of the failed services from the failure warning information; and a generating submodule configured to generate recovery paths for the failed services according to the failure location information.

The second determining module includes a second acquiring submodule configured to acquire path information of the recovery paths; and a converting submodule configured to convert the path information of the recovery paths into the SNC cross information.

In the above embodiment, a configuration result may be obtained in a following manner: after the configuration messages are sent to the corresponding OTN node, the first sending unit is further configured to send preset information to the OTN node, wherein the preset information is used to instruct the OTN node to feed back a configuration result; the apparatus further includes a second receiving unit configured to receive feedback information sent from the OTN node for indicating the configuration result.

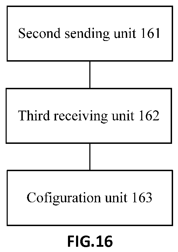

Another aspect of the embodiments of the present application further provides an embodiment of a parallel recovery apparatus for multiple services in an SDN architecture. FIG. 16 is a schematic diagram of another parallel recovery apparatus for multiple services in an SDN architecture according to an embodiment of the present application. As shown in FIG. 16, the apparatus may include a second sending unit 161, a third receiving unit 162 and a configuration unit 163.

The second sending unit 161 is configured to send at least one piece of failure warning information reported by an OTN network device to an SDN controller.

The third receiving unit 162 is configured to receive configuration messages sent by the SDN controller, wherein the configuration messages are used to reconfigure failed services.

The configuration unit 163 is configured to reconfigure OTN boards used for performing the failed services according to the configuration messages.

According to the aforesaid embodiment, the second sending unit sends at least one piece of failure warning information reported by an OTN network device to an SDN controller; the third receiving unit receives configuration messages sent by the SDN controller, wherein the configuration messages are used to reconfigure failed services; and the configuration unit reconfigures OTN boards used for performing the failed services according to the configuration messages, and all configuration related information is acquired by a certain node through receiving one message packet, which solves the technical problem in existing art of low efficiency of handling routing failure in the SDN network, and achieves a technical effect of improving the efficiency of handling routing failures in the SDN network.

It should be noted that the configuration messages includes flow_mod messages, and the OTN node is an OTN network device node (equivalent to an agent node in an OTN network device), but is not limited thereto.

The configuration unit includes a second generating module configured to generate at least one configuration command used for configuring the OTN boards according to the configuration messages; and a sending module configured to carry the configuration commands used for configuring a same OTN board in a configuration request, and send the configuration request to the corresponding OTN board.

Optionally, the second generating module includes a third acquiring submodule configured to acquire at least one piece of SNC cross information from the configuration messages; and a converting submodule configured to convert the at least one piece of SNC cross information into at least one configuration command.

Optionally, the apparatus may further include a collecting unit configured to collect configuration results of the configured OTN boards according to preset information when the preset information sent by the SDN controller is received, after the OTN boards used for performing the failed services are reconfigured according to the configuration messages; and a feedback unit configured to carry the collected configuration results in feedback information and feed back the feedback information to the SDN controller, wherein the feedback information contains identification information of the OTN boards which failed to be configured.

Optionally, the collecting unit includes a first receiving module configured to receive information sent by the OTN boards which indicates that configuration is failed; a second receiving module configured to receive information sent by the OTN boards which indicates that reconfiguration is succeeded; and a processing module configured to use configuration timeout as a configuration result of the OTN boards if no configuration result of the OTN boards is received within preset time.

In the aforesaid embodiment, a parallel recovery manner for multiple services based on extensions of the OpenFlow protocol is provided. With the manner, a plurality of SNC crosses for operating multiple services of a same OTN network device node are carried in one flow_mod message and are sent, and then a plurality of configuration commands of a same kind used for operating a same board are carried in one configuration request and are sent by the OTN network device node according to the boards to be operated by the SNC crosses, which not only simplifies signaling message interaction between the controllers and the network devices, but also increases configuration processing efficiency of the OTN boards, thereby improving parallel recovery performance for multiple serviceof the OTN network in the SDN architecture and shortening duration of failed services. If the OTN network device fails to execute the SNC crosses, a packet_in message may be used to report which SNC cross is failed to be executed.

The embodiment of the present application will be described in detail in conjunction of FIG. 6, and the apparatus may operate according to the steps S601-S611 shown in FIG. 6.

At step S601, when there is an interruption of an optical fiber in the OTN network, a controller detects a specific location of a network failure according to transmission plane failure warning information reported by an OTN network device, and computes recovery paths for services failed due to the network failure according to the failure location.

At step S602, after computation of the recovery paths for all the failed services are completed, the recovery paths for all the services are analyzed, and routing information is converted into SNC cross information, which specifically include analyzing the recovery paths which are successfully computed, and converting each recovery path information into a plurality of pieces of SNC cross information.

At step S603, according to OTN network device nodes to be operated by the SNC crosses, a plurality of pieces of SNC cross information for operating a same device-side node are sent to the corresponding device-side node (i.e., the OTN node) via a flow_mod message, then a barrier_request message is sent to the corresponding device-side node for confirming execution results, and a signaling timeout timer is activated for every operated device-side node for confirming whether a barrier_reply response message times out. It is possible to set a signaling timeout period, whose default value is a minimum multipart_reply timeout period specified in an OFP standard, that is, 1 second.

At step S604, the OTN network device-side node receives and parses the flow_mod message sent by the SDN controller, and converts the plurality of pieces of SNC cross information into a plurality of configuration commands for operating OTN boards.

At step S605, the configuration commands are classified according to each board to be operated by the configuration commands. A plurality of configuration commands of a same kind to be used for operating a same board are carried in one configuration request, and are then sent the configuration request to the corresponding board, and a cross timeout timer is activated for every operated board. It is possible to set a cross timeout period. In the present application, a default value of cross timeout is set to 500 milliseconds according to dynamic performance indicators of the OTN network device.

After receiving the barrier_request message sent by the controller, each device-side node waits for each board to return the execution result, and then responds to the controller with a barrier_reply message, details of which are described in following steps.

At step S606, configuration responses of the boards are collected, and it is determined whether executions in the boards time out, that is, the execution result of the configuration commands of each board is collected, and it is determined whether the cross timeout timers are timed out, and if yes, step S608 is performed to process in a way that configuration is failed, otherwise, step S607 is performed.

At step S607, it is determined whether the execution result of each configuration command of all the boards which need to operate are returned, and if yes, the Step S608 is performed, otherwise, the Step S606 is performed again.

At step S608, the execution results of SNC crosses of all the configuration commands of all the boards are collated, if all the commands are successfully executed, the controller is responded with a barrier_reply success message, and, if there is a board fails to execute the commends, the controller is responded with a barrier_reply failure message, and SNC ID information (identification information of the SNC board) related to the failed execution is reported with a packet_in message.

At step S609, the controller collects the execution results of SNC crosses of each device-side nodes, determines whether the signaling timeout timer is timed out, and operates the device-side node in a way that the cross is failed if the timer is timed out.

At step S610, it is determined whether all the device-side nodes have returned the execution results of the SNC crosses, and if yes, Step S611 is performed, otherwise, the Step S610 is performed again.

At step S611, the controller determines whether each service is successfully recovered according to a cross configuration result (i.e., the responded message) from each device-side node. If each node responds to the controller with a barrier_reply success message, each service is successfully recovered. If there is a device-side node responds to the controller with a barrier_reply failure message, a recovery result of each service is determined according to the SNC ID information reported by the packet_in message, and the process is ended.

In the aforesaid embodiment, an extension is performed based on the latest version of the OpenFlow protocol to package a plurality of pieces of SNC cross configuration information in one flow_mod message and send the flow_mod message to the device-side node, which improves interaction and processing efficiencies of southbound signaling. The extension is as follows.

A definition of OFXXMT_EXP_OTN_SNCID is added to ofp_experimenters_field to indicate an extension type of OXM (a mapping between data entity objects and XML nodes is called OXM). An OXM data structure of OFP_OXM_EXP_OTN_SNCID is defined as shown in FIG. 7.

In FIG. 7, ofp_oxm_class of oxm_header is filled in with OFXXMC_EXPERIMENTER, and ofp-oxm_field is filled in with OFPXMT_EXP_OTN_SNCID added by the extension according to the present application. Experimenter is filled in with OFP_OTWG_EXPERIMENTER_ID to indicate an extended OXM structure. Values of sncid are unique numbers of the device-side nodes, and different SNC crosses are numbered by using the sncid. According to the standards of the OpenFlow protocol, a signal type, an inbound port and an inbound label of an SNC cross should be placed in a match domain of a flow_mod message, and an outbound port and an outbound label of the SNC cross should be placed in an instruction domain of the flow_mod message. Therefore, a complete piece of SNC cross information can be obtained after the match domain and the instruction domain of the flow_mod message are parsed separately.

Since a plurality of SNC crosses are to be packaged in one flow_mod message, different SNC crosses are numbered by using the sncid, so that it is possible to establish a one-to-one correspondence between a plurality of pieces of inbound SNC information allocated in the match domain and a plurality of pieces of outbound SNC information allocated in the instruction domain according to the values of the sncid, thereby each SNC cross information can be completely combined while the flow_mod message is parsed.

The flow_mod message is written by numbering, via OTN_SNCID, signal type information, inbound port information and inbound label information of a plurality of SNC crosses in the match domain, and separately filling them in a plurality of OXMs in sequence. Outbound port information and outbound label information of the plurality of SNC crosses are distinguished via OTN_SNCID in the instruction domain, and are filled in a plurality of actions. For a same SNC, the value of the sncid in the match domain should be consistent with the value of the sncid in the instruction domain, and FIG. 8 shows an example of the extended flow_mod message (please refer to the related description and the relevant definition of the flow_mod message of FIG. 7 for a meaning of the message shown in FIG. 8).

In the above embodiment, the plurality of configuration commands of the same kind that are set for the same OTN board are placed in one configuration request and sent to the OTN board, which improves a processing efficiency of the board.

The configuration commands for an OTN board include: cross, mapping, wavelength assignment, wavelength tuning, and so on. In the present application, the plurality of configuration commands of the same kind are placed in one request in TLV format and sent to the corresponding board in a TLV format. Taking a cross configuration command as an example, the configuration request carries a total length of a plurality of TLVs, and each TLV carries a specific cross command which contains execution type, source board, source branch information, target board, and target branch information, and so on.

In the above embodiment, when the OTN network device fails to execute the configuration commands, and a new process is added according to the present application to use an extended packet_in message (which is a type of messages defined in the OpenFlow protocol) to report the SNC ID information related to the failed execution, so as to enable the controller to position the service which failed to execute the crosses, thereby making the parallel recovery process for multiple services more complete. A specific extension of the packet_in message is as follows.

A definition of OFPR_OTN_CONFIG_SNC_FAIL is added into ofp_packet_in_reason to indicate a reported reason of "SNC configuration failure". An extended OXM structure OFP_OXM_EXP_OTN_SNCID according to the present application is filled in the match domain of the packet_in message, wherein, the ofp_oxm_class of the oxm_header is filled in with OFPXMC_EXPERIMENTER, and the ofp-oxm_field is filled in with FPXMT_EXP_OTN_SNCID added by the extension according to the present application, and experimenter is filled in with OFP_OTWG_EXPERIMENTER_ID to indicate the extended OXM structure. The sncid is filled in with a value of sncid which fails to execute SNC crosses, and FIG. 9 shows an example of the extended packet_in message.

It should be noted that each of the above modules may be implemented by software or hardware. For the hardware, each of the above modules may be implemented in, but is not limited to, a following manner: all the above modules are located in a same processor; or, the above modules are randomly combined and are located in different processors.

### Third Embodiment

Another embodiment of the present application further provides a parallel recovery system for multiple services in an SDN architecture, including an SDN controller and an OTN node, wherein the SDN controller is configured to receive at least one piece of failure warning information reported by an OTN network device which belongs to an OTN node, and generate corresponding configuration messages for the OTN node based on the received failure warning information, wherein the configuration messages are used to reconfigure all failed services at the OTN node; and the OTN node is configured to receive the configuration messages sent by the SDN controller.

Optionally, the SDN controller is further configured to send preset information to the OTN node after the configuration messages are sent to the corresponding OTN node, wherein the preset information is used to instruct the OTN node to feed back a configuration result, and to receive feedback information sent from the OTN node for indicating the configuration result.

Specific implementations of the Third Embodiment have been explained above, and thus will not be repeated herein.

### Fourth Embodiment

An embodiment of the present application further provides a storage medium. Optionally, in the embodiment, the storage medium may be configured to store program codes, which are used for performing the following steps S11-S13.

At step S11, at least one piece of failure warning information reported by an OTN network device which belongs to an OTN node is received.

At step S12, corresponding configuration messages for the OTN node is generated based on the received failure warning information, wherein the configuration messages are used to reconfigure all failed services at the OTN node.

At step S13, the configuration messages are sent to the corresponding OTN node.

Optionally, the storage medium is further configured to store program codes, which are used for performing the following steps S21-S23.

At step S21, at least one piece of failure warning information reported by an OTN network device to an SDN controller is sent.

At step S22, configuration messages sent by the SDN controller is received, wherein the configuration messages are used to reconfigure failed services.

At step S23, OTN boards used for performing the failed services are reconfigured according to the configuration messages.

Optionally, in the embodiment, the storage medium may include, but is not limited to, a USB, a read-only memory, called ROM, a random access memory, called RAM, a mobile hard disk, a magnetic disk, an optical disc, or any medium capable of storing program codes.

Optionally, in the embodiment, a processor executes the following steps according to the program codes stored in the storage medium: receiving at least one piece of failure warning information reported by an OTN network device which belongs to an OTN node; generating corresponding configuration messages for the OTN node based on the received failure warning information, wherein the configuration messages are used to reconfigure all failed services at the OTN node; and sending the configuration messages to the corresponding OTN node.

Optionally, in the embodiment, a processor executes the following steps according to the program codes stored in the storage medium: sending at least one piece of failure warning information reported by an OTN network device to an SDN controller; receiving configuration messages sent by the SDN controller, wherein the configuration messages are used to reconfigure failed services; and reconfiguring OTN boards used for performing the failed services according to the configuration messages.

Optionally, reference may be made to the examples described in the above embodiments and optional implementations for specific examples of the Embodiment, which will not be repeated herein.

Obviously, it should be understood by those skilled in the art that all the modules or steps described above in the present application may be implemented by a general-purpose computing device, and all the modules or steps may be centralized in a single computing device or distributed in a network composed of a plurality of computing devices. Optionally, all the modules and steps may be implemented by program codes capable of being executed by the computing devices, so as to be stored in a storage device and executed by the computing devices; and in some cases, the steps illustrated or described above may be executed in an order different from the above orders. Or, each of all the modules or steps may be formed into respective integrated circuit module, or a plurality of modules or steps of all the modules or steps are formed into a single integrated circuit module. Therefore, the present application is not limited to any specific combination of hardware and software.

The embodiments described above are only preferred embodiments of the present application, but make no limitation to the present application. To those skilled in the art, the present application may include various modifications and changes. Therefore, any amendment, equivalent substitution and improvement made within the principle of the present application shall be considered to fall into the protection scope of the present application.

### Industrial Applicability

As described above, the parallel recovery method, apparatus and system for multiple services in an SDN architecture provided by the embodiments of the present application have a following beneficial effect: solving the technical problem in existing art of low efficiency of handling routing failure in the SDN network, and achieving a technical effect of improving the efficiency of handling routing failures in the SDN network.

## Claims

1. A parallel recovery method for multiple services in an Software Defined Network architecture, called SDN architecture, comprising:
receiving at least one piece of failure warning information reported by an Optical Transport Network device, called OTN network device, which belongs to an OTN node;
generating corresponding configuration messages for the OTN node based on the received failure warning information, wherein the configuration messages are used to reconfigure all failed services at the OTN node; and
sending the configuration messages to corresponding OTN node.

2. The method of claim 1, wherein, after the configuration messages are sent to the corresponding OTN node, the method further comprises:
sending preset information to the OTN node, wherein the preset information is used to instruct the OTN node to feed back a configuration result; and
receiving feedback information sent from the OTN node for indicating the configuration result.

3. The method of claim 1, wherein generating corresponding configuration messages for the OTN node based on the received failure warning information comprises:
determining recovery paths for the failed services according to the failure warning information;
determining Sub Network Connect cross information, called SNC cross information, corresponding to the recovery paths; and
generating the configuration messages containing the SNC cross information for operating the OTN node.

4. The method of claim 3, wherein determining recovery paths for the failed services according to the failure warning information comprises:
acquiring failure location information of the failed services from the failure warning information; and
generating recovery paths for the failed services according to the failure location information.

5. The method of claim 3, wherein determining SNC cross information corresponding to the recovery paths comprises:
acquiring path information of the recovery paths; and
converting the path information of the recovery paths into the SNC cross information.

6. The method of claim 1, wherein the configuration messages comprise flow_mod messages, wherein the flow_mod messages are used for carrying at least one piece of SNC cross information.

7. The method of any one of claims 1 to 6, wherein the parallel recovery method is applied to an SDN controller.

8. A parallel recovery method for multiple services in an Software Defined Network architecture, called SDN architecture, comprising:
sending at least one piece of failure warning information reported by an Optical Transport Network device, called OTN network device, to an SDN controller;
receiving configuration messages sent by the SDN controller, wherein the configuration messages are used to reconfigure failed services; and
reconfiguring OTN boards used for performing the failed services according to the configuration messages.

9. The method of claim 8, wherein reconfiguring OTN boards used for performing the failed services according to the configuration messages comprises:
generating at least one configuration command used for configuring the OTN boards according to the configuration messages; and
carrying the configuration commands used for configuring a same OTN board in a configuration request, and sending the configuration request to corresponding OTN board.

10. The method of claim 8, wherein, after the OTN boards used for performing the failed services are reconfigured according to the configuration messages, the method further comprises:
collecting configuration results of the configured OTN boards according to the preset information, while receiving preset information sent by the SDN controller; and
carrying the collected configuration results in feedback information and feeding back the feedback information to the SDN controller, wherein the feedback information contains identification information of the OTN boards which failed to be configured.

11. The method of claim 10, wherein collecting configuration results of the configured OTN boards according to the preset information comprise:
receiving information sent by OTN boards which indicates that configuration is failed;
receiving information sent by the OTN boards which indicates that configuration is succeeded; and
using configuration timeout as the configuration result of the OTN boards, if no configuration result of the OTN boards is received within preset time.

12. The method of claim 9, wherein generating at least one configuration command used for configuring the OTN boards according to the configuration messages comprises:
acquiring at least one piece of Sub Network Connect cross information, called SNC cross information, from the configuration messages; and
converting the at least one piece of SNC cross information into at least one configuration command.

13. The method of claim 9, wherein carrying the configuration commands used for configuring a same OTN board in a configuration request, and sending the configuration request to the corresponding OTN board comprises:
generating TLV data packets corresponding to the configuration commands in a TLV format; and
carrying the TLV data packets used for configuring a same OTN board in the configuration request, and sending the configuration request to the corresponding OTN board.

14. The method of claim 8, wherein the configuration messages comprise flow_mod messages, wherein the flow_mod messages are used for carrying at least one piece of SNC cross information.

15. The method of any one of claims 8 to 14, wherein the parallel recovery method is applied to an OTN node.

16. A parallel recovery apparatus for multiple services in an Software Defined Network architecture, called SDN architecture, comprising:
a first receiving unit configured to receive at least one piece of failure warning information reported by an Optical Transport Network device, called OTN network device, which belongs to an OTN node;
a generating unit configured to generate corresponding configuration messages for the OTN node based on the received failure warning information, wherein the configuration messages are used to reconfigure all failed services at the OTN node; and
a first sending unit configured to send the configuration messages to corresponding OTN node.

17. The apparatus of claim 16, wherein,
the first sending unit is further configured to send, after the configuration messages are sent to the corresponding OTN node, preset information to the OTN node, wherein the preset information is used to instruct the OTN node to feed back a configuration result; and
the apparatus further comprises a second receiving unit configured to receive feedback information sent from the OTN node for indicating the configuration result.

18. The apparatus of claim 16 or 17, wherein the generating unit comprises:
a first determining module configured to determine recovery paths for the failed services according to the failure warning information;
a second determining module configured to determine Sub Network Connect cross information, called SNC cross information, corresponding to the recovery paths; and
a first generating module configured to generate the configuration messages containing the SNC cross information for operating the OTN node.

19. The apparatus of claim 18, wherein the first determining module comprises:
a first acquiring submodule configured to acquire failure location information of the failed services from the failure warning information; and
a generating submodule configured to generate recovery paths for the failed services according to the failure location information.

20. The apparatus of claim 18, wherein the second determining module comprises:
a second acquiring submodule configured to acquire path information of the recovery paths; and
a converting submodule configured to convert the path information of the recovery paths into the SNC cross information.

21. A parallel recovery apparatus for multiple services in an Software Defined Network architecture, called SDN architecture, comprising:
a second sending unit configured to send at least one piece of failure warning information reported by an Optical Transport Network device, called OTN network device, to an SDN controller;
a third receiving unit configured to receive configuration messages sent by the SDN controller, wherein the configuration messages are used to reconfigure failed services; and
a configuration unit configured to reconfigure OTN boards used for performing the failed services according to the configuration messages.

22. The apparatus of claim 21, wherein the configuration unit comprises:
a second generating module configured to generate at least one configuration command used for configuring the OTN boards according to the configuration messages; and
a sending module configured to carry the configuration commands used for configuring a same OTN board in a configuration request, and send the configuration request to corresponding OTN board.

23. The apparatus of claim 21 or 22, wherein, the apparatus further comprises:
a collecting unit configured to collect configuration results of the configured OTN boards according to preset information while the preset information sent by the SDN controller is received, after the OTN boards used for performing the failed services are reconfigured according to the configuration messages; and
a feedback unit configured to carry the collected configuration results in feedback information and feed back the feedback information to the SDN controller, wherein the feedback information contains identification information of the OTN boards which failed to be configured.

24. The apparatus of claim 23, wherein the collecting unit comprises:
a first receiving module configured to receive information sent by OTN boards which indicates that configuration is failed;
a second receiving module configured to receive information sent by the OTN boards which indicates that configuration is succeeded; and
a processing module configured to use configuration timeout as a configuration result of the OTN boards if no configuration result of the OTN boards is received within preset time.

25. The apparatus of claim 22, wherein the second generating module comprises:
a third acquiring submodule configured to acquire at least one piece of Sub Network Connect cross information, called SNC cross information, from the configuration messages; and
a converting submodule configured to convert the at least one piece of SNC cross information into at least one configuration command.

26. A parallel recovery system for multiple services in an Software Defined Network architecture, called SDN architecture, comprising an SDN controller and an OTN node, wherein
the SDN controller is configured to receive at least one piece of failure warning information reported by an Optical Transport Network device, called OTN network device, which belongs to an OTN node, and generate corresponding configuration messages for the OTN node based on the received failure warning information, wherein the configuration messages are used to reconfigure all failed services at the OTN node; and
the OTN node is configured to receive the configuration messages sent by the SDN controller.

27. The system of claim 26, wherein the SDN controller is further configured to:
send preset information to the OTN node after the configuration messages are sent to corresponding OTN node, wherein the preset information is used to instruct the OTN node to feed back a configuration result; and
receive feedback information sent from the OTN node for indicating the configuration result.

28. An Software Defined Network device, called SDN device, comprising:
an SDN controller;
a first memory configured to store commands capable of being executed by the SDN controller; and
a first transmission device configured to receive and send information for communication under the control of the SDN controller, wherein
the SDN controller is configured to execute following operations: receiving at least one piece of failure warning information reported by an Optical Transport Network device, called OTN network device, which belongs to an OTN node; generating corresponding configuration messages for the OTN node based on the received failure warning information, wherein the configuration messages are used to reconfigure all failed services at the OTN node; and sending the configuration messages to corresponding OTN node.

29. The SDN device of claim 28, wherein the SDN controller is further configured to execute following operations: sending preset information to the OTN node after the configuration messages are sent to the corresponding OTN node, wherein the preset information is used to instruct the OTN node to feed back a configuration result; and receiving feedback information sent from the OTN node for indicating the configuration result.

30. An Optical Transport Network device, called OTN device, comprising:
an OTN controller;
a second memory configured to store commands capable of being executed by the OTN controller; and
a second transmission device configured to receive and send information for communication under the control of the OTN controller, wherein
the OTN controller is configured to execute following operations: sending at least one piece of failure warning information reported by an OTN network device to an SDN controller; receiving configuration messages sent by the SDN controller, wherein the configuration messages are used to reconfigure failed services; and reconfiguring OTN boards used for performing the failed services according to the configuration messages.

31. The OTN device of claim 30, wherein the OTN controller is further configured to execute following operations: generating at least one configuration command used for configuring the OTN boards according to the configuration messages; and carrying the configuration commands used for configuring a same OTN board in a configuration request, and sending the configuration request to corresponding OTN board.

32. A storage medium, comprising programs stored thereon, wherein the method of any one of claims 1 to 15 is performed when the programs are executed.
